(19) **Europäisches Patentamt / European Patent Office / Office européen des brevets**

(11) **EP 3 921 235 B1**

(12) **FASCICULE DE BREVET EUROPEEN**

(45) Date de publication et mention
de la délivrance du brevet:
**17.08.2022 Bulletin 2022/33**

(21) Numéro de dépôt: **20726198.3**

(22) Date de dépôt: **16.03.2020**

(51) Classification Internationale des Brevets (IPC):
***B64G 1/28*** *(2006.01)*

(52) Classification Coopérative des Brevets (CPC):
**B64G 1/285;** B64G 1/283; B64G 1/32; B64G 1/363

(86) Numéro de dépôt international:
**PCT/FR2020/050542**

(87) Numéro de publication internationale:
**WO 2020/188207 (24.09.2020 Gazette 2020/39)**

(54) **PROCÉDÉ DE CONTRÔLE D'ATTITUDE D'UN SATELLITE EN MODE SURVIE SANS CONNAISSANCE A PRIORI DE L'HEURE LOCALE DE L'ORBITE DU SATELLITE**

VERFAHREN ZUR LAGEREGELUNG EINES SATELLITEN IM ÜBERLEBENSMODUS OHNE A-PRIORI-KENNTNIS DER LOKALEN UMLAUFZEIT DES SATELLITEN

METHOD FOR ATTITUDE CONTROL OF A SATELLITE IN SURVIVAL MODE WITHOUT A PRIORI KNOWLEDGE OF THE LOCAL TIME OF THE SATELLITE'S ORBIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.03.2019 FR 1902868**

(43) Date de publication de la demande:
**15.12.2021 Bulletin 2021/50**

(73) Titulaires:
• **Airbus Defence and Space SAS**
**31402 Toulouse Cedex 4 (FR)**
• **Airbus Oneweb Satellites SAS**
**31402 Toulouse Cedex 4 (FR)**

(72) Inventeurs:
• **NEUBRAND, Yannick**
**31402 TOULOUSE Cedex 4 (FR)**
• **JULLIEN, Alexandre**
**31402 TOULOUSE Cedex 4 (FR)**
• **SACHOT, Marie**
**31402 TOULOUSE Cedex 4 (FR)**

(74) Mandataire: **Plasseraud IP**
**66, rue de la Chaussée d'Antin**
**75440 Paris Cedex 09 (FR)**

(56) Documents cités:
EP-A1- 0 778 201     WO-A1-2016/051113
FR-A1- 2 809 502     US-B1- 8 872 084

**EP 3 921 235 B1**

**Description**

**Domaine technique**

La présente invention appartient au domaine du contrôle d'attitude de satellites en orbite géocentrique, et concerne plus particulièrement le contrôle d'attitude de satellites en mode survie en orbite basse inclinée.

**Etat de la technique**

Dans la présente demande, on entend par « mode survie » tout mode de contrôle d'attitude d'un satellite visant, à partir d'un état initial perturbé, à assurer un ensoleillement des générateurs solaires qui soit suffisant pour garantir l'autonomie électrique d'une plateforme dudit satellite jusqu'à son rétablissement dans un état proche des conditions opérationnelles nominales.

Ainsi, le mode survie peut être mis en œuvre immédiatement après séparation du lanceur pour l'acquisition initiale du Soleil et/ou, après que la mission du satellite a débuté sur son orbite de mission, en cas d'incident quelconque nécessitant d'interrompre ladite mission (collision avec une météorite, défaillance d'un propulseur, etc.).

Pour un satellite en mode survie en orbite basse inclinée, équipé à la fois de magnéto-coupleurs et de volants d'inertie, il est connu de la demande de brevet EP 0778201 A1 de contrôler l'attitude en utilisant notamment une loi de contrôle des magnéto-coupleurs dite « en B point » pour indiquer qu'elle fait intervenir la dérivée du champ magnétique terrestre B.

Suivant cette loi en B point, on mesure le champ magnétique terrestre suivant les trois axes d'un repère satellite, on dérive les mesures par rapport au temps, puis on multiplie les dérivées par un gain et on fait passer un courant représentatif du résultat dans des magnéto-coupleurs pour créer des moments magnétiques internes qui tendent à arrêter les variations du champ magnétique terrestre dans le repère satellite, de sorte que le satellite suit les lignes de champ magnétique terrestre. Ainsi, pour une orbite polaire, la loi en B point provoque finalement la rotation du satellite sur lui-même à une vitesse égale, en repère inertiel, à deux fois la pulsation orbitale (c'est-à-dire que le satellite effectue deux tours sur lui-même par orbite) autour d'un axe orthogonal au plan de l'orbite.

En outre, les volants d'inertie sont commandés pour former un moment cinétique interne, dit « moment cinétique de survie », suivant un axe prédéterminé en repère satellite. Du fait de ce moment cinétique de survie formé par les volants d'inertie, et du fait de la loi en B point pour contrôler avec les magnéto-coupleurs, le satellite va naturellement s'orienter de sorte à tourner sur lui-même autour de l'axe du moment cinétique de survie. En d'autres termes, le satellite s'oriente de sorte à avoir l'axe du moment cinétique de survie orthogonal au plan de l'orbite du satellite. Afin de maximiser l'ensoleillement moyen des générateurs solaires, l'axe du moment cinétique de survie est prédéterminé notamment en fonction de l'heure locale de l'orbite du satellite, de sorte que l'axe du moment cinétique de survie en repère satellite varie d'une orbite à une autre.

Un tel contrôle d'attitude en mode survie, et en particulier une telle dépendance de l'axe du moment cinétique de survie à l'heure locale de l'orbite du satellite, peut s'avérer complexe à mettre en œuvre dans certains cas.

Par exemple, dans le cas d'une orbite basse inclinée non héliosynchrone, dite « dérivante », l'heure locale de l'orbite du satellite varie au cours du temps. Il en résulte que l'axe du moment cinétique de survie en repère satellite doit également varier au cours du temps pour être adapté à l'heure locale courante de ladite orbite. Ainsi, il est nécessaire d'actualiser régulièrement, après le lancement du satellite, l'axe du moment cinétique de survie en repère satellite afin de tenir compte de la variation au cours du temps de l'heure locale de l'orbite du satellite.

Lorsque l'orbite sur laquelle le satellite doit être mis à poste est non dérivante, alors il n'est pas forcément nécessaire de faire varier l'axe du moment cinétique de survie au cours du temps, dans la mesure où l'heure locale de l'orbite ne varie pas au cours du temps. L'axe du moment cinétique de survie en repère satellite, à utiliser en mode survie, peut alors généralement être mémorisé dans le satellite avant le lancement dudit satellite, et être conservé inchangé pendant toute la durée de la mission dudit satellite.

Toutefois, dans le cas d'une constellation de satellites comportant plusieurs satellites destinés à être placés sur des orbites d'heures locales respectives différentes, alors chaque satellite doit être préconfiguré avec un axe différent pour le moment cinétique de survie, et il n'est alors pas possible d'utiliser exactement le même logiciel de vol pour tous les satellites d'une même constellation. En outre, lorsque le nombre de satellites est grand, il n'est pas toujours possible de savoir à l'avance quelle sera l'heure locale de l'orbite sur laquelle un satellite donné sera mis à poste.

**Exposé de l'invention**

La présente invention a pour objectif de remédier à tout ou partie des limitations des solutions de l'art antérieur, notamment celles exposées ci-avant, en proposant un contrôle d'attitude d'un satellite en mode survie qui ne nécessite pas de connaître a priori l'heure locale de l'orbite sur laquelle le satellite sera mis à poste.

En outre, la présente invention a également pour objectif de proposer une solution qui soit compatible avec tout type d'orbite basse inclinée, en particulier les orbites non héliosynchrones, dites « dérivantes ».

A cet effet, et selon un premier aspect, la présente invention concerne un procédé de contrôle d'attitude d'un satellite en orbite basse inclinée en mode survie, le satellite comportant au moins un générateur solaire, au moins un senseur solaire, des magnéto-coupleurs adaptés à former des moments magnétiques internes dans un repère satellite comportant trois axes orthogonaux X, Y et Z, et des actionneurs inertiels adaptés à former des moments cinétiques internes dans ledit repère satellite. En outre, l'au moins un senseur solaire présente un champ de vision de largeur au moins 180° dans le plan XZ autour de l'axe Z, l'au moins un générateur solaire est immobile en repère satellite pendant le mode survie et dirigé de sorte à générer de l'énergie électrique lorsque le Soleil se trouve suivant l'axe Z dans le champ de vision de l'au moins un senseur solaire, et le procédé de contrôle d'attitude comporte :

- une étape de contrôle d'attitude utilisant une première loi de contrôle selon laquelle les magnéto-coupleurs sont commandés pour former des couples suivant les axes X, Y et Z pour limiter les variations du champ magnétique terrestre dans le repère satellite, et les actionneurs inertiels sont commandés pour former un moment cinétique interne suivant l'axe X,
- une étape de recherche du Soleil au moyen de l'au moins un senseur solaire, permettant de détecter si le satellite se trouve en phase de visibilité du Soleil,
- lorsqu'une première phase de visibilité du Soleil est détectée : une étape de contrôle d'attitude utilisant une seconde loi de contrôle selon laquelle les magnéto-coupleurs sont commandés pour limiter les variations du champ magnétique terrestre dans le repère satellite en formant des couples de contrôle d'attitude suivant l'axe Z, et les actionneurs inertiels sont commandés pour former des couples suivant les axes X et Y pour placer et maintenir le satellite dans une attitude en repère inertiel dans laquelle l'au moins un générateur solaire est dirigé vers le Soleil.

Ainsi, comme dans l'art antérieur, les actionneurs inertiels sont commandés, en mode survie, pour former un moment cinétique interne, dit « moment cinétique de survie », suivant un axe prédéterminé. Toutefois, contrairement à l'art antérieur, l'axe dudit moment cinétique interne est indépendant de l'heure locale de l'orbite du satellite et est toujours suivant l'axe X du repère satellite, et ce quelle que soit l'heure locale de l'orbite dudit satellite.

Au cours de l'étape de contrôle d'orbite selon la première loi de contrôle, le contrôle d'attitude va donc provoquer la rotation du satellite sur lui-même autour de l'axe X du repère satellite qui sera orthogonal au plan de l'orbite.

Grâce à la configuration particulière de l'au moins un senseur solaire, qui présente un champ de vision de largeur au moins 180° dans le plan XZ autour de l'axe Z, ledit au moins un senseur solaire finira toujours par détecter le Soleil au cours de cette rotation du satellite autour de l'axe X orthogonal au plan d'orbite, et ce quelle que soit l'heure locale de l'orbite du satellite. En effet, en une rotation du satellite sur lui-même, l'au moins un senseur solaire va balayer tout l'espace et finira donc nécessairement par détecter le Soleil, éventuellement après que le satellite sera sorti d'une phase d'éclipse du Soleil (lorsque la Terre se trouve entre le satellite et le Soleil).

Une fois le Soleil détecté, le satellite utilise une seconde loi de contrôle dans laquelle les actionneurs inertiels sont utilisés pour modifier l'orientation du satellite autour des axes X et Y, afin de placer et de maintenir le satellite dans une attitude en repère inertiel dans laquelle l'au moins un générateur solaire est dirigé vers le Soleil. Par exemple, les actionneurs inertiels sont commandés pour placer et maintenir le satellite dans une attitude dans laquelle les rayons du Soleil sont sensiblement parallèles au plan YZ, voire sensiblement parallèles à l'axe Z.

Dans des modes particuliers de mise en œuvre, le procédé de contrôle d'attitude en mode survie peut comporter en outre l'une ou plusieurs des caractéristiques suivantes, prises isolément ou selon toutes les combinaisons techniquement possibles.

Dans des modes particuliers de mise en œuvre, le procédé de contrôle d'attitude comporte, au cours d'une première phase d'éclipse du Soleil détectée après la première phase de visibilité du Soleil, une étape de contrôle d'attitude utilisant la première loi de contrôle.

Dans des modes particuliers de mise en œuvre, les magnéto-coupleurs sont commandés selon une loi en B point biaisé, au cours de la première loi de contrôle et/ou de la seconde loi de contrôle.

Dans des modes particuliers de mise en œuvre, le procédé de contrôle d'attitude comporte :

- au cours d'une phase de visibilité du Soleil détectée après la première phase d'éclipse du Soleil : une étape de contrôle d'attitude utilisant une troisième loi de contrôle qui correspond à la seconde loi de contrôle et qui comporte en outre une commande des magnéto-coupleurs pour former un couple suivant la direction du Soleil, et une commande des actionneurs inertiels pour former un moment cinétique interne suivant la direction du Soleil formant un couple qui s'oppose au couple formé par les magnéto-coupleurs suivant la direction du Soleil,
- au cours d'une phase d'éclipse du Soleil suivante : une étape d'absence de contrôle d'attitude au cours de laquelle les magnéto-coupleurs et les actionneurs inertiels ne sont pas commandés.

Dans des modes particuliers de mise en œuvre, au cours de l'utilisation de la troisième loi de contrôle, les magnéto-coupleurs et les actionneurs inertiels sont commandés jusqu'à atteindre un moment cinétique interne de norme prédéterminée dans la direction du Soleil.

Dans des modes particuliers de mise en œuvre, la seconde loi de contrôle comporte en outre une commande des magnéto-coupleurs pour désaturer les actionneurs inertiels suivant les axes X et Y.

Dans des modes particuliers de mise en œuvre, l'étape de recherche du Soleil commence à être exécutée, au cours de l'étape de contrôle d'attitude utilisant la première loi de contrôle, lorsqu'une norme d'une vitesse de rotation du satellite sur lui-même en repère inertiel devient égale ou inférieure à une valeur seuil positive prédéterminée.

Dans des modes particuliers de mise en œuvre, la première valeur seuil positive prédéterminée est égale à $K1 \cdot |w_0|$, $w_0$ étant la pulsation orbitale du satellite en repère inertiel et K1 étant un paramètre positif tel que $3 \leq K1 \leq 5$.

Dans des modes particuliers de mise en œuvre, au cours de l'utilisation de la première loi de contrôle, les magnéto-coupleurs sont commandés pour limiter les variations du champ magnétique terrestre en repère satellite de sorte à obtenir une vitesse de rotation du satellite sur lui-même en repère inertiel de norme strictement supérieure à $2 \cdot |w_0|$ et égale ou inférieure à $4 \cdot |w_0|$, $w_0$ étant la pulsation orbitale du satellite en repère inertiel.

Selon un second aspect, la présente invention concerne un produit programme d'ordinateur comportant un ensemble d'instructions de code de programme qui, lorsqu'elles sont exécutées par un processeur, configurent ledit processeur pour mettre en œuvre un procédé de contrôle d'attitude selon l'un quelconque des modes de mise en œuvre de l'invention.

Selon un troisième aspect, la présente invention concerne un satellite destiné à être placé en orbite basse inclinée comportant au moins un générateur solaire, au moins un senseur solaire, des magnéto-coupleurs adaptés à former des moments magnétiques internes dans un repère satellite comportant trois axes orthogonaux X, Y et Z, et des actionneurs inertiels adaptés à former des moments cinétiques internes dans ledit repère satellite. En outre, l'au moins un senseur solaire présente un champ de vision de largeur au moins 180° dans le plan XZ autour de l'axe Z, et l'au moins un générateur solaire est configuré pour être immobile en repère satellite pendant un mode survie et pour être dirigé de sorte à générer de l'énergie électrique lorsque le Soleil se trouve suivant l'axe Z dans le champ de vision de l'au moins un senseur solaire.

Dans des modes particuliers de réalisation, le satellite peut comporter en outre l'une ou plusieurs des caractéristiques suivantes, prises isolément ou selon toutes les combinaisons techniquement possibles.

Dans des modes particuliers de réalisation, l'au moins un générateur solaire est agencé suivant l'axe Y.

Dans des modes particuliers de réalisation, le satellite comporte deux senseurs solaires présentant chacun un champ de vision de largeur au moins 100° dans le plan XZ, et agencés de sorte à présenter conjointement un champ de vision de largeur au moins 180° dans ledit plan XZ autour de l'axe Z.

Dans des modes particuliers de réalisation, les actionneurs inertiels sont des roues de réaction.

Dans des modes particuliers de réalisation, le satellite comporte un module de commande des magnéto-coupleurs et des actionneurs inertiels, ledit module de commande étant configuré pour mettre en œuvre un procédé de contrôle d'attitude en mode survie selon l'un quelconque des modes de mise en œuvre de l'invention.

**Présentation des figures**

L'invention sera mieux comprise à la lecture de la description suivante, donnée à titre d'exemple nullement limitatif, et faite en se référant aux figures qui représentent :

- Figure 1 : une représentation schématique d'un mode de réalisation d'un satellite,
- Figure 2 : une représentation schématique d'un exemple d'agencement de senseurs solaires du satellite de la figure 1,
- Figure 3 : un diagramme représentant les principales étapes d'un procédé de contrôle d'attitude d'un satellite en mode survie,
- Figure 4 : une représentation schématique d'un premier exemple de mise en œuvre d'un procédé de contrôle d'attitude d'un satellite en mode survie,
- Figure 5 : une représentation schématique d'un second exemple de mise en œuvre d'un procédé de contrôle d'attitude d'un satellite en mode survie,
- Figure 6 : un diagramme représentant les principales étapes d'un mode préféré de mise en œuvre d'un procédé de contrôle d'attitude d'un satellite en mode survie.

Dans ces figures, des références identiques d'une figure à une autre désignent des éléments identiques ou analogues. Pour des raisons de clarté, les éléments représentés ne sont pas à l'échelle, sauf mention contraire.

**Description des modes de réalisation**

La présente invention concerne le contrôle d'attitude d'un satellite 10 en mode survie en orbite géocentrique basse inclinée.

Tel qu'indiqué précédemment, dans la présente demande, le mode survie est un mode de contrôle d'attitude mis en œuvre immédiatement après séparation du lanceur et/ou, après que la mission du satellite 10 a débuté, en cas d'incident quelconque nécessitant d'interrompre la mission (collision avec une météorite, défaillance d'un propulseur, etc.).

Par « orbite basse », on entend que l'altitude maximale du satellite 10 est telle que le champ magnétique terrestre local est non négligeable et permet la mise en œuvre de magnéto-coupleurs pour contrôler l'attitude dudit satellite. En pratique, cette condition est vérifiée notamment lorsque l'altitude maximale du satellite 10 est inférieure à 2000 kilomètres. Par «orbite inclinée », on entend que le plan de l'orbite forme un angle non nul avec le plan équatorial. En particulier, la présente invention trouve une application particulièrement avantageuse, bien que nullement limitative, dans le cas d'orbites fortement inclinées, c'est-à-dire dont le plan d'orbite forme un angle égal ou supérieur à 70° avec le plan équatorial, comme par exemple dans le cas d'orbites polaires (dont le plan d'orbite forme un angle de 90° avec le plan équatorial).

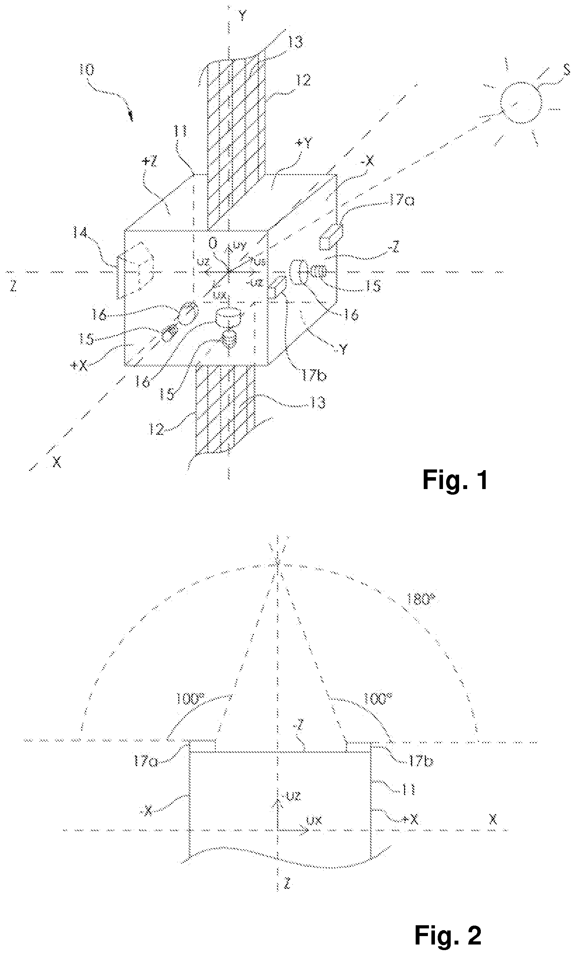

La figure 1 représente schématiquement un exemple de réalisation d'un satellite 10 selon l'invention.

On associe au satellite 10 un repère satellite, par exemple centré sur un centre de masse O du satellite 10, comportant trois axes X, Y et Z orthogonaux entre eux. Le repère satellite est lié au satellite 10, c'est-à-dire qu'il est entièrement défini par la géométrie du satellite 10. En d'autres termes, toute rotation du satellite 10 en repère inertiel se traduit par une rotation équivalente du repère satellite en repère inertiel.

Tel qu'illustré par la figure 1, le satellite 10 comporte un corps 11. Dans l'exemple nullement limitatif illustré par la figure 1, le corps 11 est sensiblement en forme de parallélépipède rectangle, et les axes X, Y et Z sont orthogonaux à des faces respectives, orthogonales entre elles, dudit corps 11. Plus particulièrement :

- l'axe X est orthogonal à des faces +X et -X du corps 11,
- l'axe Y est orthogonal à des faces +Y et -Y du corps 11,
- l'axe Z est orthogonal à des faces +Z et -Z du corps 11, dont la face +Z porte par exemple un instrument 14 d'une charge utile du satellite 10 et doit être dirigée vers la Terre T pour effectuer sa mission.

Pour les besoins de la description, on associe également, à chacun des axes X, Y et Z du repère satellite des vecteurs unitaires respectivement ux, uy et uz. Les vecteurs unitaires ux, uy et uz sont orientés du centre de masse O vers les faces respectivement +X, +Y et +Z, et l'ensemble (ux, uy, uz) constitue une base orthonormée du repère satellite. Avec les conventions adoptées dans l'exemple non limitatif illustré par la figure 1, cette base orthonormée du repère satellite est en outre directe. On comprend cependant que le choix d'une convention particulière, pour les besoins de la description de modes de réalisation de l'invention, n'est pas limitatif de l'invention qui pourrait être décrite de manière équivalente en adoptant d'autres conventions sans que l'invention en soit modifiée.

Tel qu'illustré par la figure 1, le satellite 10 comporte deux générateurs solaires 12 agencés de part et d'autre dudit corps 11. Chaque générateur solaire 12 comporte, sur une face, une surface photosensible 13 qui doit être orientée vers le Soleil S pour générer de l'énergie électrique. Dans l'exemple illustré par la figure 1, les générateurs solaires 12 sont portés par les faces +Y et -Y du corps 11, de sorte que lesdits générateurs solaires 12 sont agencés suivant l'axe Y, c'est-à-dire parallèles audit axe Y.

Il est à noter que l'invention est applicable, de manière plus générale, à un nombre quelconque de générateurs solaires 12, et est donc applicable dès lors que le satellite 10 comporte au moins un générateur solaire 12.

Dans la suite de la description, on se place de manière non limitative dans le cas où les générateurs solaires 12 sont d'orientation fixe et non modifiable par rapport au corps 11 du satellite 10. Dans l'exemple non limitatif illustré par la figure 1, les générateurs solaires 12 sont parallèles au plan XY formé par les axes X et Y, et sont agencés de telle sorte que leurs surfaces photosensibles 13 sont dirigées du côté du satellite 10 qui est opposé au côté pointé par le vecteur unitaire uz. Ainsi, les générateurs solaires 12 forment de l'énergie électrique lorsque le Soleil S se trouve du côté opposé au côté pointé par le vecteur unitaire uz. En désignant par us un vecteur unitaire orienté depuis le centre de masse O vers le Soleil S, alors les générateurs solaires 12 forment de l'énergie électrique lorsque le produit scalaire entre les vecteurs unitaires uz et us donne un résultat strictement négatif.

La présente invention est cependant également applicable au cas de générateurs solaires 12 mobiles par rapport audit corps 11. Dans le cas où les générateurs solaires 12 sont mobiles, ils sont de préférence placés dans une orientation prédéterminée au début du mode survie, et sont par exemple maintenus immobiles par rapport au corps 11 du satellite 10 pendant toute la durée dudit mode survie. L'orientation prédéterminée, dans laquelle les générateurs solaires 12 sont placés au début du mode survie, correspond par exemple à celle illustrée par la figure 1 et décrite ci-avant.

Le satellite 10 comporte également plusieurs actionneurs mis en œuvre pour le contrôle d'attitude.

Plus particulièrement, le satellite 10 comporte un ensemble de magnéto-coupleurs 15 adaptés à former un moment magnétique interne d'axe quelconque dans le repère satellite.

Le satellite 10 comporte également un ensemble d'actionneurs inertiels, tels que des roues de réaction ou des actionneurs gyroscopiques, adaptés à former un moment cinétique interne d'axe quelconque dans ledit repère satellite. Dans la suite de la description, on se place de manière non limitative dans le cas où les actionneurs inertiels sont des roues de réaction 16.

Tel qu'illustré par la figure 1, le satellite 10 comporte en outre deux senseurs solaires 17a et 17b. Dans l'exemple illustré par la figure 1, les senseurs solaires 17a, 17b sont agencés sur la face -Z du corps 11 du satellite 10. Les senseurs solaires 17a et 17b sont par exemple agencés de manière sensiblement symétrique par rapport au plan YZ formé par les axes Y et Z.

La figure 2 représente schématiquement l'agencement des senseurs solaires 17a et 17b dans le plan XZ formé par les axes X et Z. Tel qu'illustré par la figure 2, les senseurs solaires 17a et 17b ont conjointement un champ de vision qui est de largeur sensiblement égale à 180° dans le plan XZ formé par les axes X et Z, autour de l'axe Z et du côté opposé au côté pointé par le vecteur unitaire uz. En mesurant les angles par rapport à un vecteur unitaire - uz (opposé au vecteur unitaire uz), le champ de vision conjoint des senseurs solaires 17a et 17b couvre les angles -90° à 90° dans le plan XZ. Dans l'exemple illustré par la figure 2, le senseur solaire 17a présente un champ de vision de largeur sensiblement égale à 100° dans le plan XZ, qui couvre les angles -90° à 10° dans le plan XZ. Le senseur solaire 17b présente un champ de vision de largeur sensiblement égale à 100° dans le plan XZ, qui couvre les angles -10° à 90° dans le plan XZ. Ainsi, les senseurs solaires 17a et 17b couvrent conjointement un champ de vision de largeur 180° autour de l'axe Z. Avec un tel champ de vision, les générateurs solaires 12 peuvent générer de l'énergie électrique lorsque le Soleil S se trouve dans le champ de vision desdits senseurs solaires 17a et 17b. Lorsque le vecteur unitaire us est confondu avec le vecteur unitaire -uz, les rayons du Soleil S ont en outre une incidence sensiblement normale sur les surfaces photosensibles 13 desdits générateurs solaires 12.

Il est à noter que l'invention est applicable, de manière plus générale, à un nombre quelconque de senseurs solaires, et est donc applicable dès lors que le satellite 10 comporte au moins un senseur solaire. Par contre, le champ de vision couvert par le ou les senseurs solaires dudit satellite 10 doit de préférence être de largeur au moins 180° dans le plan XZ autour de l'axe Z.

Le satellite 10 comporte également un module de commande (non représenté sur les figures) adapté à commander les magnéto-coupleurs 15 et les roues de réaction 16.

Le module de commande comporte par exemple au moins un processeur et au moins une mémoire dans laquelle est mémorisé un produit programme d'ordinateur, sous la forme d'un ensemble d'instructions de code de programme à exécuter pour mettre en œuvre les différentes étapes d'un procédé 50 de contrôle d'attitude du satellite 10 en mode survie. Dans une variante, le module de commande comporte un ou des circuits logiques programmables, de type FPGA, PLD, etc., et/ou circuits intégrés spécialisés (ASIC) adaptés à mettre en œuvre tout ou partie desdites étapes du procédé 50 de contrôle d'attitude dudit satellite 10 en mode survie.

En d'autres termes, le module de commande comporte un ensemble de moyens configurés de façon logicielle (produit programme d'ordinateur spécifique) et/ou matérielle (FPGA, PLD, ASIC, etc.) pour mettre en œuvre le procédé 50 de contrôle d'attitude du satellite 10 en mode survie.

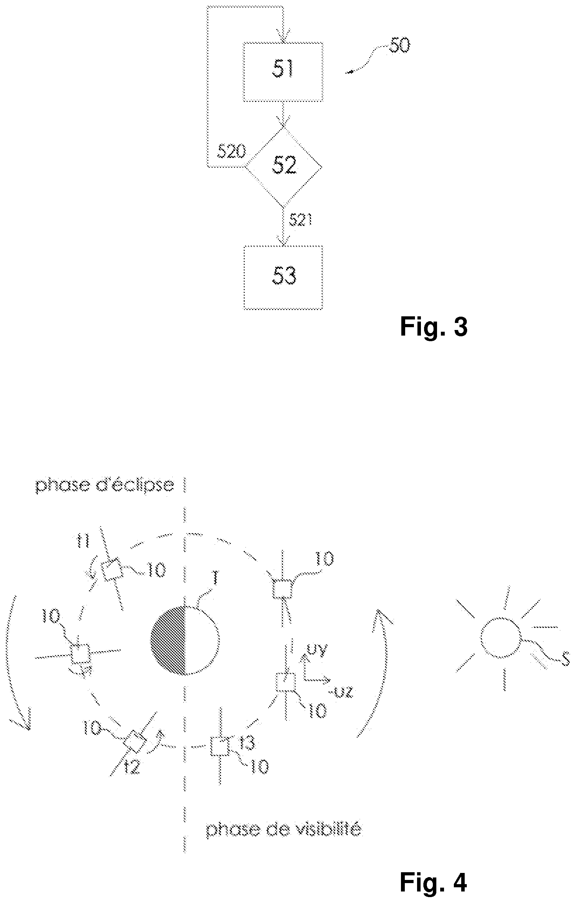

La figure 3 représente schématiquement les principales étapes d'un procédé 50 de contrôle d'attitude en mode survie du satellite 10 de la figure 1, lesquelles sont :

- une étape 51 de contrôle d'attitude utilisant une première loi de contrôle des magnéto-coupleurs 15 et des roues de réaction 16,
- une étape 52 de recherche du Soleil S au moyen des senseurs solaires 17a, 17b, permettant de détecter si le satellite se trouve en phase de visibilité du Soleil S,
- lorsqu'une première phase de visibilité du Soleil S est détectée : une étape 53 de contrôle d'attitude utilisant une seconde loi de contrôle des magnéto-coupleurs 15 et des roues de réaction 16.

Au cours de l'étape 51 de contrôle d'attitude utilisant la première loi de contrôle, les magnéto-coupleurs 15 sont commandés pour former des couples de contrôle d'attitude suivant les axes X, Y et Z pour limiter les variations du champ magnétique terrestre dans le repère satellite.

Par exemple, il est possible de contrôler lesdits magnéto-coupleurs 15 en utilisant une loi en B point telle que décrite précédemment. Le cas échéant, on dérive les valeurs locales du champ magnétique terrestre, puis on forme un moment magnétique interne proportionnel auxdites dérivées calculées, au moyen des magnéto-coupleurs 15. Les valeurs locales du champ magnétique terrestre sont par exemple des mesures effectuées par un ou des magnétomètres (non représentés sur les figures), ou encore des estimations fournies par un modèle de champ magnétique terrestre qui reçoit en entrée la position du satellite 10, par exemple estimée au moyen d'un récepteur GNSS (« Global Navigation Satellite System ») tel qu'un récepteur GPS (« Global Positioning System », non représenté sur les figures), etc.

Par exemple, la loi en B point vise à arrêter les variations du champ magnétique terrestre en repère satellite, c'est-à-dire à maintenir le champ magnétique terrestre constant en repère satellite. Tel qu'indiqué ci-dessus, une telle loi en B point va donc provoquer finalement la rotation du satellite sur lui-même à une vitesse égale, en repère inertiel, à deux fois la pulsation orbitale autour d'un axe orthogonal au plan de l'orbite du satellite 10. Pour une telle loi en B point, le moment magnétique interne formé par les magnéto-coupleurs 15 s'exprime par exemple sous la forme suivante (loi en B point non biaisée) :

[Math. 1]

$$\overrightarrow{M_{MTQ}} = -K_B \cdot \frac{d\vec{b}}{dt}$$

expression dans laquelle :

- $\overrightarrow{M_{MTQ}}$ correspond au moment magnétique interne formé par les magnéto-coupleurs 15,
- $K_B$ correspond à un gain strictement positif prédéterminé,
- $d\vec{b}/dt$ correspond à la dérivée du champ magnétique terrestre unitaire $\vec{b}$ mesuré dans le repère satellite,
- le champ magnétique terrestre unitaire $\vec{b}$ est égal à $\vec{B}/\|\vec{B}\|$, $\vec{B}$ étant le champ magnétique terrestre mesuré dans le repère satellite.

Suivant un autre exemple, la loi en B point vise à réduire les variations du champ magnétique terrestre en repère satellite, de sorte à limiter la vitesse de rotation du satellite 10 sur lui-même en repère inertiel. Comme ci-dessus, une telle loi en B point va donc provoquer finalement la rotation du satellite sur lui-même autour d'un axe orthogonal au plan de l'orbite du satellite 10, mais à une vitesse qui sera supérieure, en repère inertiel, à deux fois la pulsation orbitale. Pour une telle loi en B point, le moment magnétique interne formé par les magnéto-coupleurs 15 s'exprime par exemple sous la forme suivante (loi en B point biaisée) :

[Math. 2]

$$\overrightarrow{M_{MTQ}} = -K_B \cdot \left[ \frac{d\vec{b}}{dt} + \omega_{CTRL} \times \vec{b} \right]$$

expression dans laquelle :

- $\omega_{CTRL}$ correspond à un vecteur prédéterminé,
- $\omega_{CTRL} \times \vec{b}$ correspond au produit vectoriel entre $\omega_{CTRL}$ et $\vec{b}$.

Le gain $\omega_{CTRL}$ est par exemple prédéterminé pour aboutir à une vitesse de rotation du satellite 10 sur lui-même en repère inertiel de norme strictement supérieure à $2 \cdot |w_0|$ et égale ou inférieure à $4 \cdot |w_0|$, $w_0$ étant la pulsation orbitale du satellite 10 en repère inertiel.

Au cours de l'étape 51 de contrôle d'attitude utilisant la première loi de contrôle, les roues de réaction 16 sont commandées pour former un moment cinétique interne, dit « moment cinétique de survie », suivant l'axe X. Ainsi, comme dans l'art antérieur, l'utilisation de la première loi de contrôle aboutit à la rotation du satellite 10 sur lui-même autour d'un axe orthogonal au plan de l'orbite, le satellite 10 s'orientant naturellement de sorte à rendre l'axe du moment cinétique de survie orthogonal audit plan de l'orbite. Contrairement à l'art antérieur, l'axe du moment cinétique de survie est toujours suivant l'axe X du repère satellite et ce quelle que soit l'heure locale de l'orbite du satellite 10.

Le procédé 50 de contrôle d'attitude comporte également une étape 52 de recherche du Soleil S au moyen des senseurs solaires 17a, 17b, afin de déterminer si le satellite 10 se trouve en phase de visibilité du Soleil S.

L'étape 52 de recherche du Soleil est exécutée de préférence de manière récurrente, pendant une partie au moins de la durée du mode survie. En effet, le mode survie vise en premier lieu à assurer un ensoleillement des générateurs solaires 12 qui soit suffisant pour garantir l'autonomie d'une plateforme du satellite 10 jusqu'à son rétablissement dans un état proche des conditions opérationnelles nominales. Il est donc préférable de pouvoir détecter au plus tôt le Soleil S et d'assurer, dans la mesure du possible, le suivi de la direction du Soleil en repère satellite.

Toutefois, au début du mode survie, il faut généralement commencer par maîtriser la vitesse de rotation du satellite 10 sur lui-même et, si nécessaire réduire la vitesse de rotation du satellite sur lui-même en repère inertiel. Tant que la vitesse de rotation du satellite 10 sur lui-même est trop importante, il n'est pas forcément nécessaire d'exécuter l'étape 52 de recherche du Soleil S. Par conséquent, dans des modes particuliers de mise en œuvre, l'étape 52 de recherche du Soleil S commence à être exécutée, au cours de l'étape 51 de contrôle d'attitude utilisant la première loi de contrôle, lorsqu'une norme d'une vitesse de rotation du satellite 10 sur lui-même en repère inertiel devient inférieure à une valeur seuil V1 positive prédéterminée. La valeur seuil V1 est par exemple égale à $K1 \cdot |w_0|$, K1 étant un paramètre positif. Le paramètre K1 est par exemple tel que $3 \leq K1 \leq 5$.

Tant que le Soleil S n'est pas détecté (référence 520 sur la figure 3), le module de commande utilise la première loi de contrôle pour commander les magnéto-coupleurs 15 et les roues de réaction 16.

Lorsque le Soleil S est détecté (référence 521 sur la figure 3), alors il est déterminé que le satellite 10 se trouve en phase de visibilité du Soleil S (et non en phase d'éclipse du Soleil S). Le procédé 50 de contrôle d'attitude en mode survie comporte alors une étape 53 de contrôle d'attitude au cours de laquelle le module de commande utilise une seconde loi de contrôle.

Au cours de l'étape 53 de contrôle d'attitude utilisant la seconde loi de contrôle, les magnéto-coupleurs 15 sont commandés pour limiter les variations du champ magnétique terrestre dans le repère satellite en formant des couples de contrôle d'attitude suivant l'axe Z. Comme pour la première loi de contrôle, il est possible d'utiliser notamment l'une des lois en B point décrites précédemment (biaisée ou non biaisée), mais modifiée pour prendre en charge le contrôle d'attitude suivant l'axe Z uniquement. Etant donné que le couple formé par les magnéto-coupleurs 15 est orthogonal au champ magnétique terrestre, il n'est pas possible de former, au moyen des magnéto-coupleurs 15, des couples uniquement suivant l'axe Z. Les couples éventuellement formés suivant les autres axes X et Y sont alors des couples perturbateurs dont les effets peuvent par exemple être compensés au moyen des roues de réaction 16. Les couples perturbateurs éventuellement formés suivant les autres axes X et Y peuvent être limités en projetant sur le plan XY le moment magnétique interne $\overrightarrow{M_{MTQ}}$ fourni par la loi en B point (biaisée ou non biaisée), et en ne formant au moyen des magnéto-coupleurs 15 que la projection sur le plan XY dudit moment magnétique interne $\overrightarrow{M_{MTQ}}$ fourni par la loi en B point. En d'autres termes, en désignant par $M_{MTQ,X}$, $M_{MTQ,Y}$ et $M_{MTQ,Z}$ les composantes du moment magnétique interne $\overrightarrow{M_{MTQ}}$ suivant les axes X, Y et Z, alors cela revient à former un moment magnétique interne selon l'expression suivante :

[Math. 3]

$$\overrightarrow{M_{MTQ,XY}} = \begin{bmatrix} M_{MTQ,X} & M_{MTQ,Y} & 0 \end{bmatrix}$$

expression dans laquelle $\overrightarrow{M_{MTQ,XY}}$ désigne la projection sur le plan XY du moment magnétique interne $\overrightarrow{M_{MTQ}}$ fourni par la loi en B point.

Dans des modes de mise en œuvre, au cours de l'étape 53 de contrôle d'attitude utilisant la seconde loi de contrôle, les magnéto-coupleurs 15 peuvent également être commandés pour former des couples de désaturation suivant les axes X et Y, afin de désaturer les roues de réaction 16 suivant les axes X et Y.

Au cours de l'étape 53 de contrôle d'attitude utilisant la seconde loi de contrôle, les roues de réaction 16 sont commandées pour former des couples suivant les axes X et Y pour placer et maintenir le satellite dans une attitude en repère inertiel dans laquelle les générateurs solaires 12 sont dirigés vers le Soleil S. Par exemple, les roues de réaction 16 sont commandées pour placer et maintenir le satellite 10 dans une attitude dans laquelle le produit scalaire entre le vecteur unitaire -uz et le vecteur unitaire us (direction du Soleil S dans le repère satellite) est strictement positif, de préférence supérieur à 0.5 voire supérieur à 0.7 ou sensiblement égal à 1.

Ainsi, la seconde loi de contrôle met en œuvre un contrôle trois axes de l'attitude du satellite 10, l'attitude suivant l'axe Z étant contrôlée au moyen des magnéto-coupleurs 15, et l'attitude suivant les axes X et Y étant contrôlée au moyen des roues de réaction 16. Dans des modes particuliers de mise en œuvre de la seconde loi de contrôle, les roues de réaction 16 peuvent également être commandées pour compenser les effets des couples perturbateurs formés par les magnéto-coupleurs suivant les axes X et Y, et/ou les magnéto-coupleurs 15 peuvent également être commandés pour former des couples de désaturation desdites roues de réaction 16.

La figure 4 représente schématiquement un exemple de mise en œuvre du procédé 50 de contrôle d'attitude en mode survie, dans le cas où le satellite 10 de la figure 1 est en orbite polaire et où le point ascendant de l'orbite est à midi (le Soleil S se trouve dans le plan de l'orbite du satellite 10). Dans l'exemple illustré par la figure 4, on se place de manière non limitative dans le cas où la première loi de contrôle a été mise en œuvre jusqu'à atteindre, à un instant t1, une vitesse de rotation du satellite 10 sur lui-même en repère inertiel de norme inférieure à la valeur seuil V1. A l'instant t1, le satellite 10 est donc en rotation sur lui-même autour de l'axe X, qui est sensiblement orthogonal au plan de l'orbite du satellite 10, avec une vitesse de rotation qui est par exemple de norme sensiblement égale à $3 \cdot |w_0|$. L'étape 52 de recherche du Soleil S commence à être exécutée à l'instant t1. Entre l'instant t1 et un instant t2, le satellite 10 se trouve en phase d'éclipse du Soleil S, de sorte que le Soleil n'est pas détecté. Par conséquent, le module de commande continue d'appliquer la première loi de contrôle, et le satellite 10 poursuit sa rotation sur lui-même autour de l'axe X. A un instant t3, les senseurs solaires 17a, 17b détectent le Soleil S, et le module de commande commence à appliquer la seconde loi de contrôle. Dans l'exemple illustré par la figure 4, le contrôle d'attitude suivant l'axe Y vise à maintenir l'axe X sensiblement orthogonal au plan de l'orbite et le contrôle suivant l'axe X vise à arrêter la rotation suivant l'axe X dans une attitude telle que l'axe Z est sensiblement parallèle aux rayons du Soleil S.

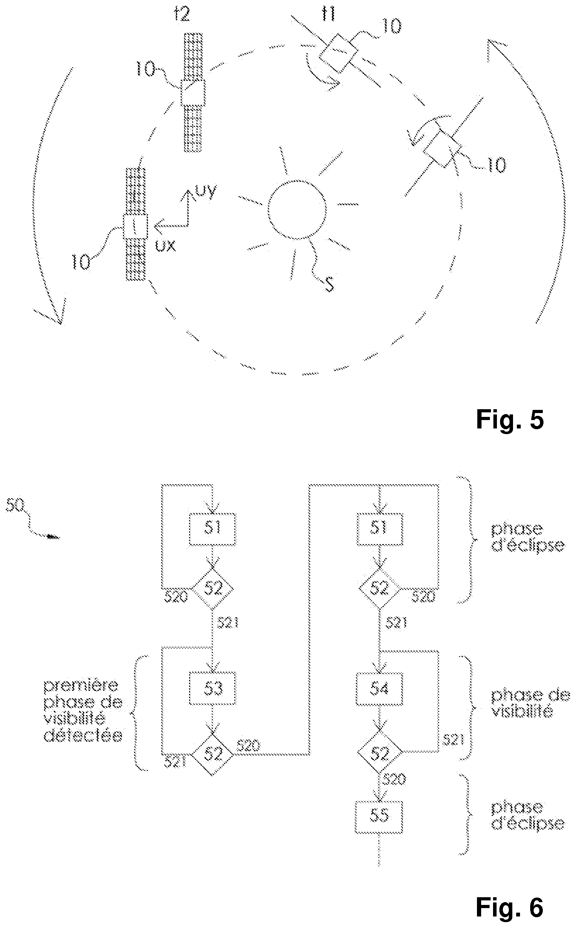

La figure 5 représente schématiquement un exemple de mise en œuvre du procédé 50 de contrôle d'attitude en mode survie, dans le cas où le satellite 10 de la figure 1 est en orbite polaire et où le point ascendant de l'orbite est à six heures (les rayons du Soleil S ont une incidence normale sur le plan de l'orbite du satellite 10). Sur la figure 5, la Terre T est masquée par le Soleil S. Dans l'exemple illustré par la figure 5, on se place de manière non limitative dans le cas où la première loi de contrôle a été mise en œuvre jusqu'à atteindre, à un instant t1, une vitesse de rotation du satellite 10 sur lui-même en repère inertiel de norme inférieure à la valeur seuil V1. A l'instant t1, le satellite 10 est donc en rotation sur lui-même autour de l'axe X, qui est sensiblement orthogonal au plan de l'orbite du satellite 10, avec une vitesse de rotation qui est par exemple de norme sensiblement égale à $3 \cdot |w_0|$. L'étape 52 de recherche du Soleil S commence à être exécutée à l'instant t1. Du fait de l'orbite considérée, les rayons du Soleil sont sensiblement parallèles à l'axe X du repère satellite. Du fait du champ de vision des senseurs solaires 17a, 17b, qui englobe l'axe X, le Soleil S peut être détecté presque immédiatement, et le module de commande commence à appliquer la seconde loi de contrôle. Dans le cas de l'orbite illustrée par la figure 4, le contrôle d'attitude suivant l'axe Y vise à modifier l'orientation du satellite pour ramener l'axe X sensiblement dans le plan de l'orbite et le contrôle d'attitude suivant l'axe X vise principalement à maintenir l'axe Y dans le plan de l'orbite. A un instant t2, le satellite 10 se retrouve orienté de sorte que l'axe Z est sensiblement orthogonal au plan de l'orbite du satellite. Si le couple formé suivant l'axe Z par les magnéto-coupleurs 15 est formé au moyen d'une loi en B point, le satellite 10 peut être en rotation sur lui-même autour de l'axe Z. Une telle rotation n'est pas problématique dans la mesure où les rayons du Soleil S sont parallèles à l'axe Z. Rien n'exclut cependant de commander les magnéto-coupleurs 15 pour former des couples de contrôle d'attitude suivant l'axe Z qui visent à arrêter la rotation du satellite 10 sur lui-même autour de l'axe Z.

Au cours de l'utilisation de la seconde loi de contrôle, l'attitude du satellite 10 est par exemple contrôlée en fonction de la direction du Soleil S telle que mesurée au moyen des senseurs solaires 17a, 17b.

Dans l'exemple illustré par la figure 4, le satellite 10 alterne des phases de visibilité du Soleil S et des phases d'éclipse du Soleil S (lorsque la Terre T se trouve entre le satellite 10 et le Soleil S). Dans un tel cas, lorsque le satellite 10 se retrouve en phase d'éclipse du Soleil S, il n'est plus possible de contrôler l'attitude du satellite 10 en fonction de la direction du Soleil S mesurée par les senseurs solaires 17a, 17b puisque le Soleil S est masqué par la Terre T.

Dans des modes particuliers de mise en œuvre, le procédé 50 de contrôle d'attitude comporte, au cours d'une phase d'éclipse du Soleil S détectée après avoir détecté une phase de visibilité du Soleil, une étape 51 de contrôle d'attitude utilisant la première loi de contrôle. Dans un tel cas, au cours de cette phase d'éclipse du Soleil S, le satellite 10 va naturellement s'orienter à nouveau de telle sorte que l'axe X (moment cinétique de survie) se retrouve sensiblement orthogonal au plan de l'orbite. En outre, le satellite 10 est alors en rotation sur lui-même autour de l'axe X, avec une vitesse de rotation en repère inertiel qui dépend de la loi de contrôle utilisée pour les magnéto-coupleurs 15. Il est à noter qu'il peut s'avérer avantageux d'utiliser une loi en B point biaisé plutôt qu'une loi en B point non biaisé. En effet, la durée de la phase d'éclipse du Soleil S est strictement inférieure à la période orbitale du satellite 10. Par conséquent, avec une loi en B point non biaisé, le satellite 10 n'a pas le temps de réaliser un tour complet sur lui-même pendant la durée de la phase d'éclipse du Soleil S. Avec une loi en B point biaisé, la vitesse de rotation du satellite 10 sur lui-même en repère inertiel est plus importante, et cette vitesse de rotation peut être choisie pour permettre au satellite 10 de tourner davantage qu'avec une loi en B point non biaisé tout en effectuant au plus un tour complet sur lui-même pendant la durée de la phase d'éclipse du Soleil S, ce qui permet d'accélérer la détection du Soleil S en sortie de phase d'éclipse du Soleil S. Par exemple, avec une loi en B point biaisé permettant d'obtenir une vitesse de rotation en repère inertiel de norme sensiblement égale à $3 \cdot |w_0|$, le satellite 10 effectuera au plus un tour complet sur lui-même pendant chaque phase d'éclipse du Soleil S, quelle que soient l'inclinaison et l'heure locale de l'orbite du satellite 10.

La première loi de contrôle peut être utilisée pendant toutes les phases d'éclipse du Soleil S, ou bien pendant une partie seulement desdites phases d'éclipse du Soleil S. De préférence, la première loi de contrôle est utilisée au moins pendant la première phase d'éclipse du Soleil détectée après la première phase de visibilité du Soleil utilisant la seconde loi contrôle. Rien n'exclut cependant d'utiliser une loi de contrôle différente de la première loi de contrôle lors des phases d'éclipse du Soleil S, y compris lors de la première phase d'éclipse du Soleil S détectée après la première phase de visibilité du Soleil S utilisant la seconde loi de contrôle.

De manière analogue, la seconde loi de contrôle peut être utilisée pendant toutes les phases de visibilité du Soleil S, ou bien pendant une partie seulement des phases de visibilité du Soleil S, et au moins pendant la première phase de visibilité du Soleil S détectée au moyen des senseurs solaires 17a, 17b.

La figure 6 représente schématiquement les principales étapes d'un mode préféré de mise en œuvre du procédé 50 de contrôle d'attitude du satellite 10 en mode survie.

Tel qu'illustré par la figure 6, le procédé 50 de contrôle d'attitude en mode survie reprend les étapes représentées sur la figure 3, et tout ce qui a été décrit précédemment en référence à la figure 3 est également applicable au mode préféré de mise en œuvre illustré par la figure 6.

Tel qu'illustré par la figure 6, le procédé 50 de contrôle d'attitude en mode survie comporte, au cours d'une première phase d'éclipse du Soleil S détectée immédiatement après la première phase de visibilité S du Soleil, une étape 51 de contrôle d'attitude du satellite qui peut utiliser par exemple la première loi de contrôle. La détection de la phase d'éclipse du Soleil S est effectuée au moyen des senseurs solaires 17a, 17b. Par exemple, si les senseurs solaires 17a, 17b ne détectent plus le Soleil S pendant une durée prédéterminée, alors cela signifie que le satellite 10 se trouve en phase d'éclipse du Soleil S. Dans l'exemple illustré par la figure 6, l'étape 52 de recherche du Soleil S est exécutée de manière récurrente. Tant que le Soleil S est détecté (référence 521 sur la figure 6), le module de commande utilise la seconde loi de commande. Lorsque le Soleil S n'est plus détecté (référence 520 sur la figure 6), le module de commande utilise par exemple la première loi de contrôle.

Tel qu'indiqué précédemment, au cours de la première phase d'éclipse du Soleil S détectée après la première phase de visibilité du Soleil S utilisant la seconde loi de contrôle, la première loi de contrôle utilise de préférence une loi en B point biaisé. De telles dispositions permettent d'assurer en principe, par un choix adapté de la vitesse de rotation en fonction de la durée de la phase d'éclipse du Soleil S (ou en fonction de la durée maximale que peut avoir une phase d'éclipse du Soleil S compte tenu de l'orbite du satellite 10), que le satellite 10 tourne davantage qu'avec une loi en B point non biaisé tout en effectuant au plus un tour complet sur lui-même pendant la durée de la phase d'éclipse du Soleil S.

Pendant la phase d'éclipse du Soleil S, l'étape 52 de recherche du Soleil S est également exécutée de manière récurrente, pour détecter la phase de visibilité du Soleil S suivante. Tant que le Soleil S n'est pas détecté au moyen des senseurs solaires 17a, 17b (référence 520 sur la figure 6), le module de commande utilise la première loi de contrôle.

Lorsque le Soleil S est détecté (référence 521 sur la figure 6), le procédé 50 de contrôle d'attitude en mode survie comporte, au cours de la phase de visibilité du Soleil S détectée, une étape 54 de contrôle d'attitude utilisant une troisième loi de contrôle. En pratique, la troisième loi de contrôle correspond à la seconde loi de contrôle décrite ci-avant, c'est-à-dire que les magnéto-coupleurs 15 sont commandés pour contrôler l'attitude suivant l'axe Z, tandis que les roues de réaction 16 sont commandées pour contrôler l'attitude du satellite 10 suivant les axes X et Y. La troisième loi de contrôle comporte en outre une commande des magnéto-coupleurs 15 pour former un couple suivant la direction du Soleil, et une commande des roues de réaction 16 pour former un moment cinétique interne suivant la direction du Soleil formant un couple qui s'oppose au couple formé par les magnéto-coupleurs 15 suivant la direction du Soleil. En d'autres termes les couples formés dans la direction du Soleil S, par respectivement les magnéto-coupleurs 15 et les roues de réaction 16, s'annulent mutuellement et les roues de réaction 16 accumulent alors un moment cinétique interne dans la direction du Soleil S. Ce contrôle est réalisé jusqu'à atteindre un moment cinétique interne de norme prédéterminée dans la direction du Soleil S, dite « norme de rigidité gyroscopique ».

Pendant la phase de visibilité du Soleil S, l'étape 52 de recherche du Soleil S est également exécutée de manière récurrente, pour détecter la phase d'éclipse du Soleil S suivante. Tant que le Soleil S est détecté au moyen des senseurs solaires 17a, 17b (référence 521 sur la figure 6), le module de commande utilise la troisième loi de contrôle.

Tel qu'illustré par la figure 6, lorsque le Soleil S n'est plus détecté (référence 520 sur la figure 6), le procédé 50 de contrôle d'attitude en mode survie comporte alors une étape 55 d'absence de contrôle d'attitude au cours de laquelle les magnéto-coupleurs 15 et les roues de réaction 16 ne sont pas commandés. Par « absence de contrôle », on entend que les magnéto-coupleurs ne sont pas commandés pour former un moment magnétique interne, et que les vitesses de rotation des roues de réaction restent inchangées.

Grâce à la rigidité gyroscopique créée par le moment cinétique interne accumulé dans la direction du Soleil S, le pointage inertiel du satellite 10 va rester sensiblement inchangé, de sorte que les générateurs solaires 12 vont rester orientés dans la direction du Soleil S. Du fait de cette rigidité gyroscopique, le Soleil S pourra être détecté rapidement en sortie de phase d'éclipse du Soleil S, puisque le pointage du satellite 10 est tel que le Soleil S se trouvera, en sortie de phase d'éclipse, directement dans le champ de vision des senseurs solaires 17a et 17b.

Dans l'exemple illustré par la figure 6, l'étape 54 de contrôle d'attitude utilisant la troisième loi de contrôle est exécutée dès la seconde phase de visibilité du Soleil S détectée au moyen des senseurs solaires 17a et 17b. Il est cependant à noter que la troisième loi de contrôle peut être utilisée ultérieurement, après avoir utilisé la seconde loi de contrôle pendant plusieurs phases de visibilité du Soleil S. L'intérêt de ne pas utiliser la troisième loi de contrôle dès la première phase de visibilité du Soleil S détectée réside principalement dans le fait qu'il n'est pas toujours possible de savoir à quel moment de l'orbite la vitesse de rotation du satellite 10 sur lui-même en repère inertiel devient inférieure en norme à la valeur seuil V1. Si cela intervient vers la fin de la phase de visibilité du Soleil S, alors il ne sera pas possible d'atteindre la norme de rigidité gyroscopique pour le moment cinétique interne accumulé dans la direction du Soleil S. Par contre, la seconde phase de visibilité du Soleil S sera généralement détectée peu de temps après la sortie de la première phase d'éclipse du Soleil S, de sorte que le module de commande dispose d'au moins la moitié de la période orbitale jusqu'à la phase d'éclipse du Soleil S suivante, de sorte qu'il sera possible d'atteindre la norme de rigidité gyroscopique pour le moment cinétique interne accumulé dans la direction du Soleil S.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant principalement un satellite 10 en orbite polaire. L'invention est cependant applicable à tout type d'orbite basse inclinée. Rien n'exclut notamment de considérer une orbite sensiblement polaire, c'est-à-dire une orbite dont l'inclinaison est égale ou supérieure à 70°. En outre, l'invention trouve une application particulièrement avantageuse dans le cas d'orbites circulaires, mais est également applicable à des orbites non circulaires (par exemple dans le cas d'une désorbitation).

## Revendications

**1.** - Procédé (50) de contrôle d'attitude d'un satellite (10) en orbite basse inclinée en mode survie, le satellite (10) comportant au moins un générateur solaire (12), au moins un senseur solaire (17a, 17b), des magnéto-coupleurs (15) adaptés à former des moments magnétiques internes dans un repère satellite comportant trois axes orthogonaux X, Y et Z, et des actionneurs inertiels (16) adaptés à former des moments cinétiques internes dans ledit repère satellite, l'au moins un senseur solaire présente un champ de vision de largeur au moins 180° dans le plan XZ autour de l'axe Z, l'au moins un générateur solaire (12) est immobile en repère satellite pendant le mode survie et dirigé de sorte à générer de l'énergie électrique lorsque le Soleil (S) se trouve suivant l'axe Z dans le champ de vision de l'au moins un senseur solaire, le procédé comporte :

- une étape (51) de contrôle d'attitude utilisant une première loi de contrôle selon laquelle les magnéto-coupleurs (15) sont commandés pour former des couples suivant les axes X, Y et Z pour limiter les variations du champ magnétique terrestre dans le repère satellite, et les actionneurs inertiels (16) sont commandés pour former un moment cinétique interne suivant l'axe X,
- une étape (52) de recherche du Soleil au moyen de l'au moins un senseur solaire (17a, 17b), permettant de détecter si le satellite se trouve en phase de visibilité du Soleil,
- lorsqu'une première phase de visibilité du Soleil est détectée : une étape (53) de contrôle d'attitude utilisant une seconde loi de contrôle selon laquelle les magnéto-coupleurs (15) sont commandés pour limiter les variations du champ magnétique terrestre dans le repère satellite en formant des couples de contrôle d'attitude suivant l'axe Z, et les actionneurs inertiels (16) sont commandés pour former des couples suivant les axes X et Y pour placer et maintenir le satellite dans une attitude en repère inertiel dans laquelle l'au moins un générateur solaire est dirigé vers le Soleil.

**2.** - Procédé (50) selon la revendication 1, comportant, au cours d'une première phase d'éclipse du Soleil détectée après la première phase de visibilité du Soleil, une étape (51) de contrôle d'attitude utilisant la première loi de contrôle.

**3.** - Procédé (50) selon l'une quelconque des revendications 1 à 2, comportant :

- au cours d'une phase de visibilité du Soleil détectée après la première phase de visibilité du Soleil : une étape (54) de contrôle d'attitude utilisant une troisième loi de contrôle qui correspond à la seconde loi de contrôle et qui comporte en outre une commande des magnéto-coupleurs (15) pour former un couple suivant la direction du Soleil, et une commande des actionneurs inertiels (16) pour former un moment cinétique interne suivant la direction du Soleil formant un couple qui s'oppose au couple formé par les magnéto-coupleurs (15) suivant la direction du Soleil,
- au cours d'une phase d'éclipse du Soleil suivante : une étape (55) d'absence de contrôle d'attitude au cours de laquelle les magnéto-coupleurs et les actionneurs inertiels ne sont pas commandés.

**4.** - Procédé (50) selon la revendication 3, dans lequel, au cours de l'utilisation de la troisième loi de contrôle, les magnéto-coupleurs et les actionneurs inertiels sont commandés jusqu'à atteindre un moment cinétique interne de norme prédéterminée dans la direction du Soleil.

**5.** - Procédé (50) selon l'une quelconque des revendications 1 à 4, dans lequel les magnéto-coupleurs sont commandés selon une loi en B point biaisé dans la première loi de contrôle et/ou dans la seconde loi de contrôle.

**6.** - Procédé (50) selon l'une quelconque des revendications 1 à 5, dans lequel la seconde loi de contrôle comporte en outre une commande des magnéto-coupleurs (15) pour désaturer les actionneurs inertiels (16) suivant les axes X et Y.

**7.** - Procédé (50) selon l'une quelconque des revendications 1 à 6, dans lequel l'étape (52) de recherche du Soleil commence à être exécutée, au cours de l'étape (51) de contrôle d'attitude utilisant la première loi de contrôle, lorsqu'une norme d'une vitesse de rotation du satellite (10) sur lui-même en repère inertiel devient égale ou inférieure à une valeur seuil positive prédéterminée.

**8.** - Procédé (50) selon la revendication 7, dans lequel la première valeur seuil positive prédéterminée est égale à $K1 \cdot |w_0|$, $w_0$ étant la pulsation orbitale du satellite (10) en repère inertiel et K1 étant un paramètre positif tel que $3 \leq K1 \leq 5$.

**9.** - Procédé (50) selon l'une quelconque des revendications 1 à 8, dans lequel, au cours de l'utilisation de la première loi de contrôle, les magnéto-coupleurs (15) sont commandés pour limiter les variations du champ magnétique terrestre en repère satellite de sorte à obtenir une vitesse de rotation du satellite (10) sur lui-même en repère inertiel de norme strictement supérieure à $2 \cdot |w_0|$ et égale ou inférieure à $4 \cdot |w_0|$, $w_0$ étant la pulsation orbitale du satellite en repère inertiel.

**10.** - - Satellite (10) destiné à être placé en orbite basse inclinée comportant au moins un générateur solaire (12), au moins un senseur solaire (17a, 17b), des magnéto-coupleurs (15) adaptés à former des moments magnétiques internes dans un repère satellite comportant trois axes orthogonaux X, Y et Z, et des actionneurs inertiels (16) adaptés à former des moments cinétiques internes dans ledit repère satellite, **caractérisé en ce que** l'au moins un senseur solaire (17a, 17b) présente un champ de vision de largeur au moins 180° dans le plan XZ autour de l'axe Z, l'au moins un générateur solaire (12) est configuré pour être immobile en repère satellite pendant un mode survie et pour être dirigé de sorte à générer de l'énergie électrique lorsque le Soleil (S) se trouve suivant l'axe Z dans le champ de vision de l'au moins un senseur solaire (17a, 17b), ledit satellite comportant en outre un module de commande des magnéto-coupleurs (15) et des actionneurs inertiels (16), ledit module de commande étant configuré pour mettre en oeuvre un procédé (50) de contrôle d'attitude en mode survie selon l'une quelconque des revendications 1 à 9.

**11.** - - Satellite (10) selon la revendication 10, dans lequel l'au moins un générateur solaire (12) est agencé suivant l'axe Y.

**12.** - Satellite (10) selon l'une quelconque des revendications 10 à 11, comportant deux senseurs solaires (17a, 17b) présentant chacun un champ de vision de largeur au moins 100° dans le plan XZ, et agencés de sorte à présenter conjointement un champ de vision de largeur au moins 180° dans ledit plan XZ autour de l'axe Z.

**13.** - Satellite (10) selon l'une quelconque des revendications 10 à 12, dans lequel les actionneurs inertiels (16) sont des roues de réaction.

**14.** - Produit programme d'ordinateur **caractérisé en ce qu'**il comporte un ensemble d'instructions de code de programme qui, lorsqu'elles sont exécutées par un processeur du module de commande d'un satellite selon l'une quelconque des revendications 10 à 13, configurent ledit module de commande pour mettre en oeuvre un procédé (50) de contrôle d'attitude selon l'une quelconque des revendications 1 à 9.

**Patentansprüche**

**1.** Verfahren (50) zur Lageregelung eines Satelliten (10) in einer niedrigen Umlaufbahn, die in den Überlebensmodus geneigt ist, wobei der Satellit (10) wenigstens einen Solargenerator (12), wenigstens einen Solarsensor (17a, 17b), Magnetkoppler (15), die dazu ausgebildet sind, innere magnetische Momente in einem Satellitenbezugssystem mit drei orthogonalen Achsen X, Y und Z zu bilden, und Trägheitsaktuatoren (16), die dazu ausgebildet sind, innere kinetische Momente in dem Satellitenbezugssystem zu bilden, umfasst; wobei der wenigstens eine Solarsensor ein Sichtfeld mit einer Breite von wenigstens 180° in der XZ-Ebene um die Z-Achse aufweist, wobei der wenigstens eine Solargenerator (12) während des Überlebensmodus in der Satellitenmarkierung unbeweglich und derart ausgerichtet ist, dass er elektrische Energie erzeugt, wenn sich die Sonne (S) entlang der Z-Achse im Sichtfeld des wenigstens einen Solarsensors befindet, wobei das Verfahren umfasst:

- einen Schritt (51) zur Lageregelung unter Verwendung eines ersten Regelungsgesetzes, bei dem die Magnetkoppler (15) derart gesteuert werden, dass sie Drehmomente entlang der X-, Y- und Z-Achse bilden, um Änderungen des Erdmagnetfelds im Satellitenbezugssystem zu begrenzen, und die Trägheitsaktuatoren (16) derart gesteuert werden, dass sie ein internes kinetisches Moment entlang der X-Achse bilden,

- einen Schritt (52) der Sonnensuche mittels des wenigstens einen Solarsensors (17a, 17b), welcher erlaubt, festzustellen, ob sich der Satellit in einer Phase befindet, in der die Sonne sichtbar ist,
- wenn eine erste Phase der Sichtbarkeit der Sonne festgestellt wird : einen Lageregelungsschritt (53) unter Verwendung eines zweiten Regelungsgesetzes, bei dem die Magnetkoppler (15) derart gesteuert werden, dass sie Änderungen des Erdmagnetfelds im Satellitenbezugssystem durch Bildung von Lageregelungsdrehmomenten entlang der Z-Achse begrenzen, und die Trägheitsaktuatoren (16) so gesteuert werden, dass sie Drehmomente entlang der X- und Y-Achse bilden, um den Satelliten in eine Trägheitsposition zu bringen und dort zu halten, wobei der wenigstens eine Solargenerator auf die Sonne gerichtet wird.

2. Verfahren (50) nach Anspruch 1, das während einer ersten Phase der Sonnenfinsternis, die nach der ersten Phase der Sichtbarkeit der Sonne festgestellt wird, einen Schritt (51) zur Lageregelung unter Verwendung des ersten Regelungsgesetzes umfasst.

3. Verfahren (50) nach einem der Ansprüche 1 bis 2, umfassend:

- während einer Phase der Sichtbarkeit der Sonne, die nach der ersten Phase der Sichtbarkeit der Sonne erfasst wird : einen Lageregelungsschritt (54), der ein drittes Regelungsgesetz verwendet, das dem zweiten Regelungsgesetz entspricht und ferner eine Steuerung der Magnetkoppler (15) umfasst, um ein Drehmoment in Richtung der Sonne zu bilden, und eine Steuerung der Trägheitsaktuatoren (16), um ein inneres kinetisches Moment in Richtung der Sonne zu bilden, das ein Drehmoment bildet, das zu dem von den Magnetkopplern (15) in Richtung der Sonne gebildeten Drehmoment entgegengesetzt ist,
- in einer nachfolgenden Phase der Sonnenfinsternis: einen Schritt (55) ohne Lageregelung, wobei die Magnetkoppler und die Trägheitsaktuatoren nicht gesteuert werden.

4. Verfahren (50) nach Anspruch 3, wobei während der Anwendung des dritten Regelungsgesetzes die Magnetkoppler und die Trägheitsaktuatoren so lange gesteuert werden, bis sie ein internes kinetisches Moment mit vorbestimmter Norm in Richtung der Sonne erreichen.

5. Verfahren (50) nach einem der Ansprüche 1 bis 4, wobei die Magnetkoppler nach einem B-Punkt-Bias-Gesetz im ersten und/oder im zweiten Regelgesetz gesteuert werden.

6. Verfahren (50) nach einem der Ansprüche 1 bis 5, wobei das zweite Regelungsgesetz ferner eine Steuerung der Magnetkoppler (15) umfasst, um die Trägheitsaktuatoren (16) entlang der X- und Y-Achse zu emtsättigen.

7. Verfahren (50) nach einem der Ansprüche 1 bis 6, wobei der Schritt (52) der Sonnensuche während des Schrittes (51) zur Lageregelung unter Verwendung des ersten Regelgesetzes beginnt, wenn eine Norm einer Drehgeschwindigkeit des Satelliten (10) um sich selbst in einem Trägheitsbezugssystem gleich oder kleiner als ein vorbestimmter positiver Schwellenwert wird.

8. Verfahren (50) nach Anspruch 7, wobei der erste vorbestimmte positive Schwellenwert gleich $K1 \cdot |w_0|$ ist, wobei $w_0$ die Orbitalpulsation des Satelliten (10) im Trägheitssystem ist und K1 ein positiver Parameter ist, so dass $3 \leq K1 \leq 5$ ist.

9. Verfahren (50) nach einem der Ansprüche 1 bis 8, wobei während der Verwendung des ersten Regelungsgesetzes, die Magnetkoppler (15) derart gesteuert werden, dass sie die Änderungen des Erdmagnetfelds im Satellitenbezug begrenzen, um eine Rotationsgeschwindigkeit des Satelliten (10) um sich selbst im Trägheitsbezug mit einer Norm zu erhalten, die streng größer als $2 \cdot |w_0|$ und gleich oder kleiner als $4 \cdot |w_0|$ ist, wobei $w_0$ die Orbitalpulsation des Satelliten im Trägheitsbezug ist.

10. Satellit (10), der dazu vorgesehen ist, in eine geneigte niedrige Umlaufbahn gebracht zu werden, mit wenigstens einem Solargenerator (12), wenigstens einem Solarsensor (17a, 17b), Magnetkopplern (15), die dazu ausgebildet sind, innere magnetische Momente in einem Satellitenbezugssystem mit drei orthogonalen Achsen X, Y und Z zu bilden, **dadurch gekennzeichnet, dass** der wenigstens eine Solarsensor (17a, 17b) ein Sichtfeld mit einer Breite von wenigstens 180° in der XZ-Ebene um die Z-Achse aufweist, dass der wenigstens eine Solargenerator (12) dazu konfiguriert ist, während eines Überlebensmodus im Satellitenbezugssystem unbeweglich zu sein und derart ausgerichtet zu werden, dass er elektrische Energie erzeugt, wenn sich die Sonne (S) entlang der Z-Achse im Sichtfeld des wenigstens einen Solarsensors (17a, 17b, 17c) befindet, wobei der Satellit ferner ein Steuermodul für die Magnetkoppler (15) und die Trägheitsaktuatoren (16) umfasst, wobei das Steuermodul dazu ausgebildet ist, ein Verfahren (50) zur Lageregelung im Überlebensmodus nach einem der Ansprüche 1 bis 9 zu implementieren.

**11.** Satellit (10) nach Anspruch 10, wobei der wenigstens eine Solargenerator (12) entlang der Y-Achse angeordnet ist.

**12.** Satellit (10) nach einem der Ansprüche 10 bis 11, umfassend zwei Solarsensoren (17a, 17b), die jeweils ein Sichtfeld mit einer Breite von wenigstens 100° in der XZ-Ebene aufweisen und derart angeordnet sind, dass sie gemeinsam ein Sichtfeld mit einer Breite von wenigstens 180° in der XZ-Ebene um die Z-Achse aufweisen.

**13.** Satellit (10) nach einem der Ansprüche 10 bis 12, wobei die Trägheitsaktuatoren (16) Reaktionsräder sind.

**14.** Computerprogrammprodukt, **dadurch gekennzeichnet, dass** es einen Satz von Programmcodebefehlen enthält, die, wenn sie von einem Prozessor des Steuermoduls eines Satelliten nach einem der Ansprüche 10 bis 13 ausgeführt werden, das Steuermodul dazu konfigurieren, ein Verfahren (50) zur Lageregelung nach einem der Ansprüche 1 bis 9 auszuführen.

**Claims**

**1.** - Method (50) for attitude control of a satellite (10) in inclined low orbit in survival mode, the satellite (10) comprising at least one solar generator (12), at least one solar sensor (17a, 17b), magnetic torquers (15) capable of forming internal magnetic moments in a satellite reference frame comprising three orthogonal axes X, Y, and Z, and inertial actuators (16) capable of forming internal angular momentums in said satellite reference frame, the at least one solar sensor has a field of view at least 180° wide in the XZ plane around the Z axis, the at least one solar generator (12) is stationary in the satellite reference frame during survival mode and directed so as to generate electrical energy when the sun (S) is located along the Z axis within the field of view of the at least one solar sensor, the method comprising:

- a step (51) of attitude control using a first control law according to which the magnetic torquers (15) are controlled to form torques along the X, Y, and Z axes in order to limit the variations of the Earth's magnetic field in the satellite reference frame, and the inertial actuators (16) are controlled to form an internal angular momentum along the X axis,
- a step (52) of searching for the sun by means of the at least one solar sensor (17a, 17b), making it possible to detect whether the satellite is in a phase of visibility of the sun,
- when a first phase of visibility of the sun is detected: a step (53) of attitude control using a second control law according to which the magnetic torquers (15) are controlled to limit the variations of the Earth's magnetic field in the satellite reference frame by forming attitude control torques along the Z axis, and the inertial actuators (16) are controlled to form torques along the X and Y axes to place and maintain the satellite in an attitude in an inertial reference frame in which the at least one solar generator is directed towards the sun.

**2.** - Method (50) according to claim 1, comprising, during a first phase of eclipse of the sun detected after the first phase of visibility of the sun, a step (51) of attitude control using the first control law.

**3.** - Method (50) according to any one of claims 1 to 2, comprising:

- during a phase of visibility of the sun detected after the first phase of visibility of the sun: a step of attitude control (54) using a third control law which corresponds to the second control law and which further comprises a controlling of the magnetic torquers (15) to form a torque in the direction of the sun, and a controlling of the inertial actuators (16) to form an internal angular momentum in the direction of the sun forming a torque that opposes the torque formed by the magnetic torquers (15) in the direction of the sun,
- during a subsequent phase of eclipse of the sun: a step (55) of no attitude control, during which the magnetic torquers and inertial actuators are not controlled.

**4.** - Method (50) according to claim 3, wherein, during the use of the third control law, the magnetic torquers and inertial actuators are controlled until an internal angular momentum of predetermined norm is reached in the direction of the sun.

**5.** - Method (50) according to any one of claims 1 to 4, wherein the magnetic torquers are controlled according to a biased b-dot law in the first control law and/or in the second control law.

**6.** - Method (50) according to any one of claims 1 to 5, wherein the second control law further comprises a controlling of the magnetic torquers (15) to desaturate the inertial actuators (16) along the X and Y axes.

7. - Method (50) according to any one of claims 1 to 6, wherein the step (52) of searching for the sun starts to be executed, during the step (51) of attitude control using the first control law, when a norm of a rotational speed of the satellite (10) on itself in the inertial reference frame becomes less than or equal to a predetermined positive threshold value.

8. - Method (50) according to claim 7, wherein the first predetermined positive threshold value is equal to $K1 \cdot |w_0|$, $w_0$ being the orbital angular frequency of the satellite (10) in the inertial reference frame and K1 being a positive parameter such that $3 \leq K1 \leq 5$.

9. - Method (50) according to any one of claims 1 to 8, wherein, during the use of the first control law, the magnetic torquers (15) are controlled to limit the variations of the Earth's magnetic field in the satellite reference frame so as to obtain a rotational speed of the satellite (10) on itself in the inertial reference frame of a norm strictly greater than $2 \cdot |w_0|$ and less than or equal to $4 \cdot |w_0|$, $w_0$ being the orbital angular frequency of the satellite in the inertial reference frame.

10. - Satellite (10) intended to be placed in a inclined low orbit, comprising at least one solar generator (12), at least one solar sensor (17a, 17b), magnetic torquers (15) capable of forming internal magnetic moments in a satellite reference frame comprising three orthogonal axes X, Y, and Z, and inertial actuators (16) capable of forming internal angular momentums in said satellite reference frame, **characterized in that** the at least one solar sensor (17a, 17b) has a field of view at least 180° wide in the XZ plane around the Z axis, the at least one solar generator (12) is configured to be stationary in the satellite reference frame during a survival mode and to be directed so as to generate electrical energy when the sun (S) is located along the Z axis within the field of view of the at least one solar sensor (17a, 17b), said satellite further comprising a control module for controlling the magnetic torquers (15) and the inertial actuators (16), said control module being configured to implement a method (50) for attitude control in survival mode according to any one of claims 1 to 9.

11. - Satellite (10) according to claim 10, wherein the at least one solar generator (12) is arranged along the Y axis.

12. - Satellite (10) according to any one of claims 10 to 11, comprising two solar sensors (17a, 17b) each having a field of view at least 100° wide within the XZ plane, and arranged so as to jointly present a field of view at least 180° wide within said XZ plane around the Z axis.

13. - Satellite (10) according to any one of claims 10 to 12, wherein the inertial actuators (16) are reaction wheels.

14. - Computer program product **characterized in that** it comprises a set of program code instructions which, when executed by a processor of the control module of a satellite according to any one of claims 10 to 13, configure said control module to implement a method (50) for attitude control according to any one of claims 1 to 9.

**Fig. 1**

**Fig. 2**

**Fig. 3**

phase d'éclipse

phase de visibilité

**Fig. 4**

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0778201 A1